# EUROPEAN PATENT APPLICATION

(11) **EP 3 422 299 A1**
(43) Date of publication of application: **02.01.2019**
(21) Application number: 18179777.0
(22) Date of filing: 26.06.2018
(51) Int. Cl.: G07C 5/00

(54) **METHOD, SERVER, COMPUTER PROGRAM, VEHICLE AND SYSTEM FOR DETERMINING A TECHNICAL STOP OF A VEHICLE**

(30) Priority: 28.06.2017 IT 201700072629
(71) Applicant: Targa Telematics S.r.l., 31100 Treviso (IT)
(72) Inventor: STEFANELLI, Carlo, 31100 Treviso (IT)
(74) Representative: Hoffmann Eitle

(57) **Abstract**

The present invention relates to the accurate determination of the presence of a technical stop. According to one method for determining a technical stop of a vehicle at a maintenance centre, there are envisaged the steps of:
- storing (S100) maintenance area information comprising information representing at least one area of a maintenance centre;
- receiving (S110) position information from said vehicle at least at a first instant comprised in a plurality of time instants;
- determining (S120) an entry status into a maintenance centre when the position information received at the first time instant is in correlation with said maintenance area information;
- determining (S130), at the second time instant following the first time instant, a secondary status on the basis of secondary information received by the vehicle;
- determining (S140) the presence of a technical stop status on the basis of said entry status and said secondary status.

## Description

### TECHNICAL FIELD

The invention relates to the determination of technical stops of vehicles, and in greater detail to a method, a server, a computer program, a vehicle and a system for determining a technical stop of a vehicle.

### BACKGROUND OF THE INVENTION

It may occur that a vehicle becomes unavailable for use due, for example, to a technical malfunction. In these cases one commonly speaks of a "technical stop", which means the period of time that starts from when the vehicle ceases being available to the user to when it is delivered back to him or her. The user may be a short-or long-term hirer, but also the owner of the vehicle. A technical stop can be generated by a breakdown (and in this case the time is counted from when the vehicle is picked up by a breakdown lorry, or directly from the moment in which the breakdown occurs), or by routine or special maintenance, where the user takes the vehicle directly to a workshop or body shop. The concept of a technical stop is used in particular (but not only) by so-called long-term hire companies (LTH) or in general by vehicle fleet managers, for whom the existence of a technical stop and knowledge of how long it will last is relevant for various reasons, for example in order to optimise the operation of the vehicles, efficiency in exploiting the vehicle fleet, etc.

### SUMMARY OF THE INVENTION

Different ways of acquiring information about the start of the technical stop are conceivable, for example notifications from the workshop, from the roadside assistance service that received a call for assistance, from the breakdown lorry that picked up the vehicle, or from the user (also indirectly, for example if the latter requests a replacement car, indicating that the main car is in a technical stop). For the purpose of determining the end of the technical stop, one can similarly rely on a series of notifications, for example from the workshop, from the user, etc. Such notification methods are typically carried out manually, which results in imprecision due to errors of the operator and lack of promptness due to delays at the stage of processing notifications. It is conceivable to make the notifications automatic, for example by transmitting a corresponding notification message to a central server. However, it has been found that such systems for reporting the technical stop, even when automated by means of notification messages, remain imprecise and in any case not sufficiently prompt. The inventors have in fact observed, from an analysis performed on the operation of such conceivable notification systems, that the reported technical stop is not accurate, in the sense that it corresponds with poor precision to the actual (real) technical stop, and that in some cases, from the notifications made, the very presence of a technical stop is not even exactly detected (irrespective of its duration). In some cases it has been found that the technical stop, even if its presence has been correctly detected with such conceivable systems, has been determined to have a length with errors of even a week, and that it is difficult to reach a precision of half a working day. As further observed by the inventors, other automatic solutions for detecting the presence of technical stops are also conceivable, such as, for example, installing sensors in proximity to maintenance centres and reporting the presence of a detected vehicle to a server. However, such systems entail the installation of sensors in the maintenance centres themselves, are moreover complex (as they require, for example, recognition of the vehicle, etc.), and are subject to detection errors due to their complexity and poor interoperability. Therefore, one object of the invention is to remedy the problems encountered in the detection of technical stops, and to improve the detection of technical stops. The detection of the presence of a technical stop means, among other technical advantages, increasing the level of utilisation of the vehicle or of the fleet of vehicles to which it belongs, and thus the level of efficiency. In fact, it becomes possible to (re-)allocate other vehicles, or allocate one or more other vehicles momentarily not in use (for example, by enabling them for use).

The invention can thus be illustrated by the following aspects, numbered for the sake of convenience and ease of comprehension.

According to a first aspect A1, there is provided a method for determining a technical stop of a vehicle at a maintenance centre, wherein the vehicle is preferably comprised in a fleet of vehicles, the method comprising the steps of:
- (storing (S100) maintenance area information comprising information representing at least one area of a maintenance centre;
- receiving (S110) position information from said vehicle at least at a first instant comprised in a plurality of time instants;
- determining (S120) an entry status into a maintenance centre when the position information received at the first time instant is in correlation with said maintenance area information;
- determining (s130), at the second time instant following the first time instant, a secondary status on the basis of secondary information received from the vehicle;
- determining (S140) the presence of a technical stop status on the basis of said entry status and said secondary status.

A2. The method according to the aspect A1, wherein said secondary information indicates a disappearance of a malfunction in an electronic on-board device.
A3. The method according to the aspect A1 or A2, wherein the secondary information comprises information on the vehicle's position at a third time instant and a fourth time instant, and wherein
   determining said secondary status comprises determining that the position information at said third instant is not in correlation with said maintenance centre area information, and the position information at said fourth instant is in correlation with said maintenance centre area information, wherein the difference between said third time instant and fourth time instant is greater than or equal to a predetermined threshold.
A4. The method according to any one of the aspects A1 to A3, wherein the secondary information comprises position information of the vehicle at a plurality of time instants following the first time instant, and wherein
   determining said secondary status comprises determining that the position information at each of said plurality of time instants is in correlation with said maintenance centre area information, and wherein said plurality of time instants defines a time interval greater than or equal to a certain threshold.
A5. The method according to any one of the preceding aspects A1 to A4, wherein said secondary information comprises information indicating a situation of malfunctioning.
A6. The method according to any one of the preceding aspects A1 to A5, wherein said maintenance area information for a maintenance centre comprises additional area information representing at least one additional area of the maintenance centre.
A7. The method according to any one of the preceding aspects A1 to A6, comprising the steps of
   - receiving additional position information from a plurality of vehicles for which a technical stop status at a same maintenance centre has been determined;
   - determining an added area condition when, for a predetermined number of vehicles comprised in said plurality, respective additional position information is mutually correlated, but not correlated with said area information;
   - adding, to said maintenance area information for said same maintenance centre, additional area information representing at least one additional area of the maintenance centre
A8. The method according to any one of the preceding aspects A1 to A7, comprising the step of
   - determining an exception handling condition; and wherein
   - said presence of a stop status is additionally determined on the basis of said exception handling condition.
A9. The method according to the aspect A8, wherein said exception handling condition is determined when said entry status is determined in a predetermined time interval.
A10. The method according to the aspect A8 or A9, wherein said exception handling condition is determined when an entry status condition is detected a predetermined number of times in a predetermined time interval.
A11. The method according to one of the preceding aspects, wherein said vehicle is a first vehicle comprised in a set of vehicles, the method further comprising the step of
   determining a rate of use of the set of vehicles on the basis of said presence of a stop status for said first vehicle.
A12. The method according to one of the preceding aspects, wherein said vehicle is a first vehicle comprised in a set of vehicles, the method further comprising the step of:
   determining an enabling status for a second vehicle comprised in said set and differing from said first vehicle on the basis of said presence of a stop status.
A13. The method according to one of the preceding aspects, wherein said vehicle is a first vehicle comprised in a set of vehicles, the method further comprising the step of:
   programming a programmed stop status for a second vehicle comprised in said set and differing from said first vehicle on the basis of said presence of a stop status.

According to a further aspect A14, there is provided a server (200) for determining a technical stop of a vehicle at a maintenance centre, wherein the vehicle is preferably comprised in a fleet of vehicles, the server comprising:
- a memory (210) for storing maintenance area information comprising information representing at least one area of a maintenance centre;
- a receiver (220) for receiving position information from said vehicle at least at a first time instant and a second time instant; and a processor (230) for:
- determining an entry status into a maintenance centre when the position information received at the first time instant is in correlation with said maintenance area information;
- determining, at the second time instant following the first time instant, a secondary status on the basis of secondary information received from the vehicle;
- determining the presence of a technical stop status on the basis of said entry status and said secondary status.

According to a further aspect A15, there is provided a computer program comprising instructions which, when the program is run on a computer, ensure that the computer performs the steps of any one of the aspects A1 to A13.

According to a further aspect A16, there is provided a vehicle (400) for monitoring information related to a technical stop of a vehicle at a maintenance centre, wherein the vehicle is preferably comprised in a fleet of vehicles, the vehicle comprising:
- a processor (410) configured to generate position information at a plurality of time instants;
- a transmitter (420) configured to send said position information to a server at a first time instant; wherein
- said transmitter (420) is further configured to send secondary information at a second time instant following the first time instant.

According to a further aspect A17, there is provided a system (500) for determining the technical stop of at least one vehicle at a maintenance centre, the system comprising a server (510) according to the aspect A14 and said at least one vehicle (520).

### LIST OF FIGURES

Figure 1 illustrates a flow diagram of a method for determining a technical stop of a vehicle according to a first embodiment of the present invention;
Figure 2 illustrates a block diagram of a server for determining a technical stop of a vehicle according to a second embodiment of the present invention;
Figure 3 illustrates a block diagram of a computer adapted to determine a stop status according to a third embodiment of the present invention;
Figure 4 illustrates a block diagram of a vehicle adapted to monitor information related to a technical stop according to a fourth embodiment of the present invention;
Figure 5 shows a block diagram of a system for determining a stop status according to a fifth embodiment of the present invention;
Figure 6 illustrates a block diagram of a system according to a further embodiment;
Figure 7 represents a block diagram illustrating an example according to the present invention.

### DETAILED DESCRIPTION

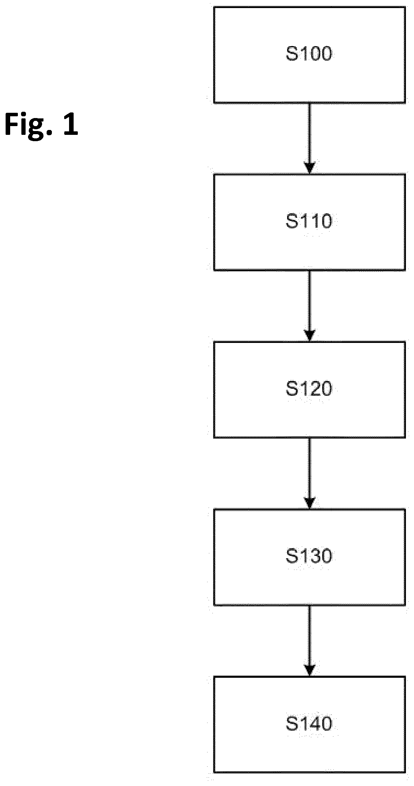

As recognised by the inventors, it is possible to process information automatically recorded by a vehicle and on the basis thereof to determine a technical stop with high accuracy, automatically and autonomously. Once the presence of a technical stop has been accurately and/or promptly detected for a vehicle, it is possible to have, for example, a general view of the operating status of a fleet (in the sense of a set) of vehicles and thus decide how to (re-)allocate the use and operation of one or more other vehicles of the fleet. For example, when the presence of a technical stop is detected, a system for controlling the allocation of resources (represented by the vehicles of the fleet) is capable of allocating (for example by enabling) a vehicle of the fleet that is inactive at that moment so as to replace the vehicle in a stop status, or of modifying the programmed stop times of one or more vehicles (for example for routine maintenance) with the aim of balancing the use of resources at a given time or within a given interval of time. This means that the rate of utilisation of the fleet as a whole is increased, and consequently every resource (in the sense of a vehicle) is efficiently used. A fleet of vehicles means a set or plurality of vehicles, wherein the fleet is preferably subject to control by a control entity that controls, for example, the allocation thereof to one or more respective users, or controls other activities such as, for example, routine maintenance activities. Control entity means a device that is localised (in one unit) or distributed, made up of software and/or hardware, and configured to control the operation and/or activity and/or allocation of a plurality of vehicles, preferably in relation to one or more users. In greater detail, and with reference to figure 1, a first embodiment related to a method for determining a technical stop of a vehicle at a maintenance centre will now be described. The vehicle is preferably comprised in a fleet or set of vehicles. Maintenance centre means any facility in which the vehicle must be present in order to undergo checks, supervision and/or repairs, as a result of which it will not be available to the user. As noted earlier, technical stop means an interval of time in which the vehicle is not available for use by the user of the vehicle, where user means the driver, or whoever hires from a short- or long-term hire company, an owner, etc. The term vehicle comprises any means of transport of people and/or goods, including cars, lorries, vans, motorcycles, bicycles, etc.

In step S100, the method stores (for example in a memory, or in a database) maintenance area information comprising information representing at least one area of a maintenance centre. In other words, the area information describes, in a form that can be stored in a memory or database (and thus processed by a computer), an area representative of the actual area of the maintenance centre. It is noted that the area information can similarly describe the perimeter of the maintenance centre; in fact, to say that a vehicle has entered a workshop is the same as saying that the vehicle has entered the area (or surface) occupied by the workshop or, similarly, within the perimeter thereof. Reference will therefore be made indistinctly to a perimeter or area, where area of the centre means the surface occupied thereof as delimited by its perimeter. For example, the representative area can be given by a circle which approximately represents the surface occupied by the maintenance centre; the centre C and the radius R of the circle are thus examples of area information. It follows that the pair (C, R) approximately represents the main area (or perimeter) of the maintenance centre. The invention is not limited to representation by means of a circle; other examples are in fact conceivable, such as a square, a rectangle, a pentagon, etc. or a combination thereof, in which case the approximate area will be described by a sufficient number of parameters (points and/or distances) so as to describe that example shape. It is further conceivable to represent the surface of the maintenance centre by means of a set of points and/or lines that reproduce the actual perimeter of the maintenance centre as faithfully as possible. However, it is not necessary to store all the points of said perimeter. Optionally, and as will be illustrated further below, a number of areas can be stored for each maintenance centre; furthermore, information corresponding to a number of maintenance centres can be stored, each having one or more areas.

In step S110, position information is received from the vehicle at a plurality of time instants. In one example, such position information is detected by the vehicle (by way of non-limiting example, via a GPS or GNSS device installed on-board), sent through a communication network and received at a server. The plurality of time instants can belong to a sequence of instants that follow one another with a pre-established frequency, for example of two minutes (but other values are applicable, e.g. 1m, 5m, 10m, etc.). The vehicle can report position information at a first time instant and at a further time instant, wherein said two instants do not necessarily immediately follow each other within that sequence. It is advantageous to report the position frequently so as to enable the server to determine the entry status with accuracy (see further below); at the same time, reporting it too frequently (for example every second) could unnecessarily increase the network traffic. Therefore, the position will be reported at sufficiently small intervals so as to enable the determination of an entry status with a certain accuracy. Furthermore, the position does not necessarily have to be reported, as explained further below, in the case of a workshop equipped with an identification system based on near-field communication. In another example, the first and/or further time instant are time instants corresponding to a respective trigger condition: for example, the position is reported when the vehicle detects that it has moved by a certain distance, such as, for example, ten metres (other values are possible, e.g. 5m, 20m, 50m, etc., i.e. a distance that is sufficiently small to be comparable with the size of the area of the centre, preferably smaller or at most slightly larger). In other words, the trigger condition is that the vehicle has undergone a movement, preferably below a certain threshold, at which the position is reported at a certain time instant (coinciding with or shortly after the detection of the trigger). The positions can also be reported combining the two conditions mentioned above, for example when the vehicle moves by a certain distance relative to a previously notified position, and wherein the second notification must not be sent later than a certain time (e.g. 2min) after the first notification. Furthermore, the vehicle can be configured with a detector for detecting signals emitted by the maintenance centre (for example, a signal detectable only at a short distance, as in near-field communication): in such a case, the vehicle reports a first position when it detects the signal of the centre, and sends a second position after a certain time (e.g. 2min) and/or after the vehicle has detected a certain movement (e.g. of 10m), and/or when it has detected the signal of the centre again. In the example considered of near-field communication, the vehicle can directly report the entry status described further below to the server, instead of or in addition to the position information. Furthermore, if the signal of the workshop comprises an identification code of the workshop, the notification of the position could be omitted altogether.

In step S120 an entry status into a maintenance centre is determined when the position information received at the first time instant is in correlation with the maintenance area information. Correlation means that the position information is for example such as to fall within the area or perimeter representing the maintenance centre, or close to the perimeter (for example, the position of the vehicle is inside the perimeter/area defined by the area information, plus or minus a predetermined threshold of tolerance). The entry status can be determined by the server or, as an alternative, directly by the vehicle (see the case of near-field communication).

In a step S130, a secondary status is determined, at a second time instant following the first time instant, on the basis of secondary information received by the vehicle. In other words, in addition to detecting the position reported at the first time instant, the vehicle can report additional information, on the basis of which it is possible to derive a secondary (or additional) status. In one example, the secondary status provides an additional indication that the vehicle is in a stop status. For example, the secondary status indicates at least one among a presence, an appearance and a disappearance of a malfunction of the vehicle.

In a step S140, the presence of a technical stop status is determined on the basis of the entry status and the secondary status.

In other words, the entry status can also be described as a first indication of the presence of a stop status, and the secondary status as an additional indication (of confirmation, as it were) of the presence of the stop status. Therefore, the method is capable of automatically and autonomously determining the presence of the stop status, i.e. the interval of time in which the vehicle is not available to the user, on the basis of information received directly and autonomously from the vehicle. Autonomous means that the system is capable of governing itself in carrying out the method, since it receives information automatically sent and since it determines the technical stop by itself (autonomously, precisely). Furthermore, since the determination is not based simply on the vehicle's position when it enters the workshop, and indeed it also takes secondary information into account, it is possible to determine the actual presence of the vehicle in the workshop with accuracy. It follows that the method is capable of autonomously and automatically determining a technical stop with high accuracy (that is, the technical stop thus determined is accurately near the time interval of a real stop), which is not otherwise achievable, even through other automatic notification methods.

Optionally, the secondary information indicates a disappearance of a malfunction indicated by or verified by an on-board electronic device. In other words, the additional information indicates that, in addition to the fact that the vehicle is inside a workshop, a certain malfunction (previously detected, for example by the on-board unit) is no longer present, thus confirming that the vehicle has actually been taken care of in the workshop and was not in another place instead. Therefore, in presence of secondary information indicating that the malfunction has disappeared, it is possible to determine that the secondary status corresponds to additional information on the stop status, or, in other words, that the secondary status is a technical stop confirmation status. If the secondary status is a status that indicates the disappearance of a malfunction of the vehicle, it is possible to accurately determine the stop status and also that the stop status has ended or is close to ending. This makes it possible, for example, to improve the factor of utilisation of the vehicle or a fleet of vehicles to which the vehicle belongs.

Optionally, the secondary information comprises information about the vehicle's position at a third time instant and at a fourth time instant. In this optional modification, the step of determining S130 comprises determining that the position information at the third time instant is not in correlation with the maintenance area information centre; in other words, at the third time instant, it is determined that the vehicle is no longer inside or near the maintenance centre. Furthermore, step S130 comprises determining that the position information at the fourth time instant is in correlation with the area information of the maintenance centre; that is, at the fourth time instant, it is determined that the vehicle is once again inside or near the maintenance centre. In this optional modification of the method, the difference (in absolute value) between the third and fourth time instants is greater than or equal to a predetermined threshold, set equal, for example, to two hours (however, other parameters can also be established dynamically, as described further below). According to this variant, expressed in other words, the secondary information indicates that the vehicle has left and re-entered the workshop (for example for a technical road test) within a pre-established time, thus confirming that the vehicle is in a technical stop. The predetermined threshold can be updated automatically by the server, for example by correlating given information for a number of vehicles and/or a number of stops for each vehicle with other information provided from the outside (for example, confirmations sent by the user and/or by the workshop), with the aim of improving the precision in detecting the road test. Therefore, in this variant as well, it can be determined that the secondary status (on the basis of the above-described secondary information) is a technical stop confirmation status.

According to an optional modification of the present method, the secondary information comprises position information of the vehicle at a plurality of time instants following the first time instant, and wherein determining the secondary status comprises determining that the position information at each of the plurality of time instants is in correlation with the maintenance area information centre, and wherein the plurality of time instants defines a time interval greater than or equal to a certain threshold. For example, the vehicle is continuously in the workshop and reports its position to the server with a certain frequency (for example every two minutes); in such a case, the server is capable of determining that the vehicle was always in the workshop for a certain interval of time. By setting the threshold at a certain value, it is possible to determine, with a high degree of accuracy and reliability, that the stop of the vehicle is actually a technical stop, since the vehicle has remained in the workshop for a certain interval of time. In another example, the vehicle (i) detects the position with a certain frequency when the aforesaid time interval greater than or equal to a certain threshold has elapsed, and (ii) reports to the server secondary information which indicates that the vehicle has always been in the workshop and that it has not moved (except possibly by small distances compatible with the perimeter) during that time interval. In another example, the vehicle measures its movements during an interval T: when the vehicle determines that the entity of the movements is less than the radius of the representative area of the workshop (in the example of a representation by a circle) plus or minus a certain threshold of tolerance, and when this determination is established at intervals of time that follow one another within the aforesaid interval T, the vehicle reports to the server that it has not moved during the interval T. Therefore, the vehicle and/or the server are capable of determining, via secondary information, that the vehicle has been inside the area of the maintenance centre for a predefined time interval; in such a manner it is possible to determine the presence of a technical stop with accuracy, i.e. it can be determined that the secondary status (on the basis of the above-described secondary information) is a technical stop confirmation status. The time instants contained in the aforesaid time interval are sufficiently close to one another to ensure that the vehicle has really not left the workshop. For example, a value of two minutes (or, similarly, of one minute, five minutes, etc.) is sufficient for that purpose, whereas a time interval of 12 hours might not serve that purpose.

According to an optional modification of the present method, the secondary information comprises information indicating a situation of malfunctioning. For example, the information about the malfunction comprises an alarm, and/or a request for roadside assistance, etc. In this optional modification as well, it can be determined that the secondary status (on the basis of the above-described secondary information) is a technical stop confirmation status.

According to a further optional modification of the present method, the maintenance area information for a given maintenance centre comprises additional area information representing at least one additional area of the maintenance centre. For example, a main area and an additional area can be associated with a maintenance centre. The main area can be represented, in one example, by the surface area in which the repairs are performed (optionally comprising a first car park), whereas the additional area, in one example, is represented by a (second) car park. In this manner, it is possible to increase the ways of representing the area of the centre according to need in order to increase the accuracy in determining the technical stop.

Furthermore, the method of the present embodiment optionally comprises the steps of: receiving additional position information from a plurality of vehicles for which a technical stop status at a same maintenance centre has been determined; determining an added area condition when, for a predetermined number of vehicles comprised in the plurality, respective additional position information is mutually correlated, but not correlated with the maintenance centre area information; and adding, to the maintenance area information for said same maintenance centre, additional area information representing at least one additional area of the maintenance centre. In other words, the system can be capable of autonomously learning of the existence of an additional area when, for example, it is detected that a certain number M of vehicles in a stop status are inside a certain area A', which does not coincide, however, with the area of the workshop A as stored, for example, in the database. When the number of vehicles M is sufficiently large, the server can establish with a sufficiently high degree of accuracy that, for example, there exists an additional area belonging to the same workshop, or that, for example, the workshop has expanded; in another example, the server is able to improve the representation of the actual area of the workshop by combining together the area information initially stored with the additional area information. In the latter example, in other words, the area of the maintenance centre is updated by adding the additional area information autonomously and automatically determined by the server to the initial area information. Therefore, the system is capable of "learning" to refine the accuracy in representing the centre, and thus in determining the technical stop.

The method of the present embodiment can optionally comprise a step of determining an exception handling condition, in which case the presence of the stop status is determined, in addition, also on the basis of said exception handling condition. In other words, in a "reduced" configuration the system determines the stop status on the basis of the entry status and secondary status, which thus represent basic pre-established rules; however, such rules can be expanded so as to also comprise additional rules for handling exceptions, for example to filter out false positives. As also discussed further below, in fact, it may occur that a user lives in the same building where the workshop is located or nearby, so that the server could erroneously detect a technical stop status of the vehicle also when the latter is in reality only parked in immediate proximity to the workshop. Simplifying, it can be said that the exception condition serves to cancel a secondary status which, if otherwise detected, would instead confirm the technical status. For practical purposes, the handling of the exception can force the setting of the secondary status so that it will not indicate a confirmation of a stop status, or so that it is cancelled (if already set), or overruled, etc.

Optionally, the exception handling condition is determined when an entry status is determined in a predetermined time interval. In one example, when the vehicle enters the area of a workshop, or is in the vicinity thereof, in pre-established time slots, thanks to the exception it is determined that the vehicle is not in a stop status, since, in other words, the stop status was detected in the pre-established time slot. A pre-established time slot can be the time slot outside working hours, in which case the rule for handling the exception takes account of the fact that the vehicle is in the vicinity of the workshop, but not because it has to undergo maintenance.

According to a further optional variant, the exception handling condition is determined (or generated) when an entry status condition is detected a predetermined number of times in a predetermined time interval. In fact, the server can autonomously learn an exception rule: in the case concerned, when an entry status condition is determined for a vehicle a number of times N' and within a same time interval, the server is capable of determining that in the case of that vehicle the proximity to the maintenance centre is not to be associated with a stop status. The number of times N' can be, for example, a number of times N1 for the same vehicle or a number of times N2 for a number X (i.e. a plurality) of vehicles. For example, if the presence of a vehicle is always detected near a workshop (i.e. an entry status is detected) N1 times between 5 p.m. and 8.30 a.m. of the following morning, it is established that in the case of that vehicle, it is not a matter of a technical stop, and, therefore, the entry status, also when associated with a secondary status, must not be associated with a stop status.

Optionally, in the method described herein, the vehicle is a first vehicle comprised in a set of vehicles; in such a case, the method can comprise a step of determining the rate of use of the set of vehicles on the basis of said presence of a stop status for said first vehicle. In such a way it is possible to monitor the efficiency of the fleet's operation and, according to the rate of modular operation, for example, technical servicing.

Optionally, in the method described herein, the vehicle is a first vehicle comprised in a set of vehicles, and the method further comprises the step of determining an enabling status for a second vehicle comprised in said set, and differing from said first vehicle, on the basis of said presence of a stop status. In such a way, it is possible to increase the rate of use of the fleet, since every vehicle is used at maximum capacity.

Optionally, in the method described herein, the vehicle is a first vehicle comprised in a set of vehicles, and the method further comprises the step of programming a programmed stop status for a second vehicle comprised in said set, and differing from said first vehicle, on the basis of said presence of a stop status. In this case as well, therefore, it is possible to increase the factor of utilisation of the vehicles.

What was said earlier with reference to the first embodiment also applies for the server, computer program, vehicle, system and everything else described below, which is the reason why only the main aspects of the other embodiments will be illustrated below, and in respect of further details, including optional ones, reference may be made thereto.

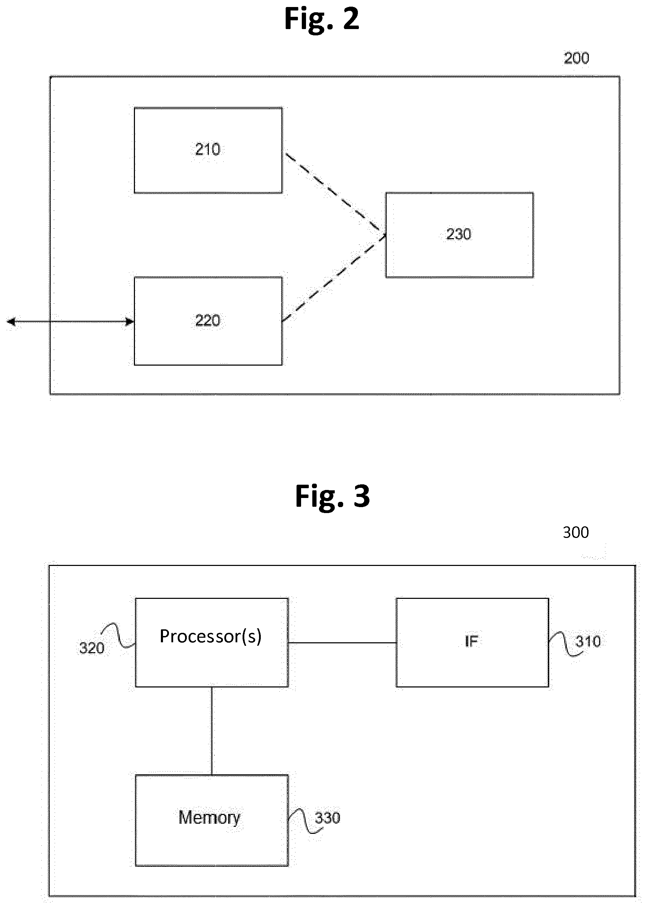

With reference to figure 2, a second embodiment relating to a server for determining a technical stop of a vehicle at a maintenance centre will now be described. Preferably, the vehicle is comprised in a fleet of vehicles. Server means a device capable of receiving and processing information from one or more vehicles, wherein the server can be made up of any combination of software and/or hardware and wherein the server can further be made in a concentrated form (i.e. in a single device) or in a distributed manner (wherein the functions are for example distributed over devices that are interconnected to one another, for example via a network or other means suited to that purpose). In fact, server means any hardware and/or software entity, concentrated and/or distributed, suitable for determining a technical stop according to the present invention. The server 100 comprises a memory 210, a receiver 220 and a processor 230. It follows from what was said earlier that the memory, the receiver, and the processor can be implemented through any receiving, exception and processing means, respectively, and that the invention is thus not limited to a specific configuration of the server or of the units described herein.

The memory 210 is configured to store maintenance area information, comprising information representing at least one maintenance area.

The receiver 220, is instead configured to receive position information from the vehicle at least at a first time instant (optionally, also at a second time instant and/or at further time instants). The processor is thus configured to determine an entry status into a maintenance centre when the position information received at the first time instant is in correlation with the maintenance centre area information. Furthermore, the processor, at the second time instant following the first time instant, determines a secondary status on the basis of secondary information received from the vehicle. The presence of a technical stop status is thus determined by the processor on the basis of the entry status and secondary status.

The server according to this embodiment is therefore capable of autonomously determining a technical stop status of a vehicle with high accuracy.

A third embodiment directed at a computer program comprising instructions which, when the program is run on a computer, ensure that the computer will execute any, or any combination, of the steps of the method described with reference to the first embodiment, including the optional aspects thereof and/or the related examples, will now be illustrated with reference to figure 3. In particular, figure 3 illustrates a computer 300 comprising a processor 320, an interface (IF) 310, and a memory 330. The interface 310 is capable of receiving information from external entities, such as vehicles, for example, and optionally also of transmitting information to the same, as well as communicating with other devices, such as servers, not illustrated. The memory 330 is capable of storing information in a temporary (volatile) manner and/or nonvolatile information (such as, for example a database and/or information related to the program to be followed).

It is noted that in the embodiments explained above, reference is made to a database. This can be stored in the memory 210 of the centre in figure 2 or in the memory 330 of the computer in figure 3; however, the database can likewise be stored in a device or a plurality of devices external to the server 200 or computer 300, in which case the external database can communicate with the server 201 or with the computer 300 via the respective receiver 220 or interface 310, respectively.

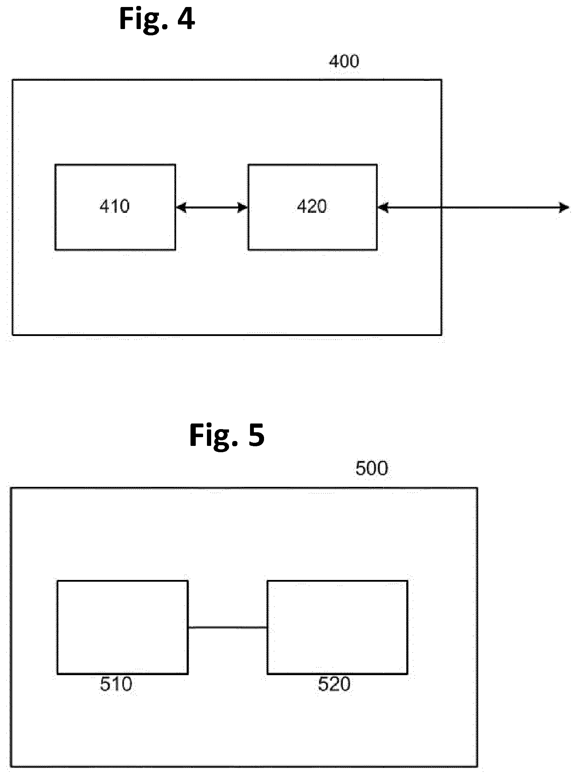

A fourth embodiment directed at a vehicle 400 for monitoring information related to a technical stop of the vehicle itself at a maintenance centre will now be described with reference to figure 4. The vehicle is preferably included in a fleet of vehicles. The vehicle comprises a processor 410 and a transmitter 420. The processor 410 is configured to generate position information at a plurality of time instants. The transmitter 420 is configured to send to a server (for example, the one described with reference to the second embodiment) the position information at a first time instant. In one example, the position information refers to a first time instant comprised in a plurality of time instants in which the processor records said information. The transmitter 420 can then send it at the same first time instant or with a slight delay. The transmitter 420 is configured to send secondary information at a second time instant following the first time instant.

As will be illustrated further below, the processor 410 and transmitter 420 can be implemented in an on-board unit installed in the vehicle, and comprising any software and/or hardware combination such as to transmit information to a server (optionally, also to receive it, as illustrated further below) and to process the information before it is transmitted where necessary. Optionally, the on-board unit can be configured to communicate with other devices installed inside the vehicle in order to collect information necessary to generate the position information and secondary information, or can contain within it a corresponding means for generating such information. For example, the on-board unit can comprise within it a GPS or GNSS position receiver, or can be configured to receive position information from a satellite receiver of the vehicle navigation system, from a user device (for example a smartphone) connected to the on-board unit, etc. The on-board unit can be configured to receive information from electronic control units installed in the vehicle, and in particular to receive alarm and/or malfunction signals from one of these control units. Reference may be made to the examples set forth further below with reference to the on-board unit. The transmitter 420 is preferably capable of communicating with a control entity (also in a reception mode, thus being a transceiver), wherein the control entity is configured to control the vehicle and preferably a plurality of vehicles of a fleet.

A fifth embodiment directed at a system 500 for determining the technical stop of at least one vehicle 520 at a maintenance centre, wherein the system 500 comprises a server 510 and at least said vehicle 520, will now be illustrated with reference to figure 5. The server 510 can include the server 200 illustrated in figure 2, which, as noted, can be configured to perform any or any combination of the steps (related to a server) of the method of the first embodiment. The vehicle 510 can be any vehicle capable of reporting position information and/or secondary information; in one example, the vehicle 520 can be represented by a vehicle 402 according to the fourth embodiment. Optionally, the server can also be configured to perform the functions of a control entity, even though said control entity can be distinct from the server and be in communication with the server and/or at least one between the vehicle and a plurality of vehicles of the fleet.

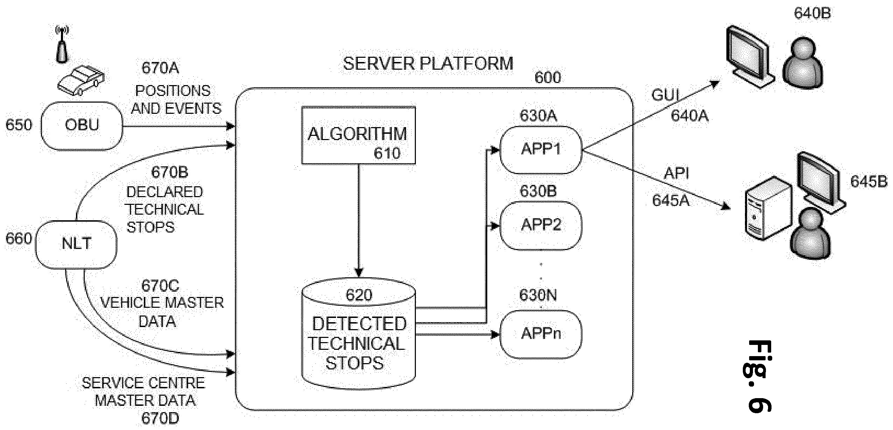

With reference to figure 6, a non-limiting example is provided to illustrate the operation of the invention. In long-term hire vehicles (660), on-board units (OBUs, 650) are present which detect the vehicle's position via GPS, and some significant events through internal sensors or external electrical connections (e.g.: by means of internal accelerometers they detect impacts, and via a wire connected to the starter motor they detect whether the vehicle is on). Optionally, the OBUs can also detect signals circulating in the CAN network of the vehicle, directly or via a connection to the standard OBD port present in all vehicles. OBUs communicate with a server by means of a telephone network. The connection is typically via GPRS, but alternatively also via SMS or fast new-generation networks (3G, 4G, ultra narrow band connections, etc.). Furthermore, the connection is made via a secure channel established by telephone operators (typically, a private APN is sufficient). The communication between the OBU and server is two-way, in the sense that the OBUs transmit the data they pick up to the server and, furthermore, the server can send them commands (typically to update the OBU firmware). As mentioned, the position can be detected by means of a GPS receiver incorporated in the OBU, or can be detected by means of the GPS navigation system (if present), or provided by means of a device such as a smartphone of the user connected to the vehicle, for example by Bluetooth. The position is not necessarily detected by GPS, but can also be detected, for example, through triangulation of signals from a cellular network, or other position detection systems, also a cellular network (for example TDOA, etc.).

The server with which the OBUs communicate can be included in a broader context, for example in a software PLATFORM. The latter can be physically hosted in one or more server farms and the main software components thereof can be divided into the following categories:
- Data ingestion, which involves the reception of data originating from OBUs, other field sensors, databases, and external information systems (customers and third party partners). Data ingestion is an example of a unit comprised in the server for storing information received from vehicles (in the example, received from OBUs).
- Repository, for the storage of large volumes of data. The Repository is an example of the database or memory described above.
- Analytics, for analysing data of a descriptive, predictive, or prescriptive type.
- Operational Intelligence, which serves to carry out actions based on what has been found in the analyses, automatically or manually. This unit is an example of the processor, or computing means, of the server described above.
- Applications (630A, 630B, ..., 630N), which serve to specify to users the specific functionalities offered by the platform, by means of a:
   ∘ GUI (interface user, 640A, 640B), which may be directly consulted by users, typically by means of a web browser or smartphone app;
      or API (645A, 645B) accessible by the servers of the customers, and typically available in REST mode, or as a SOAP webservice.

Within the framework of the analytics of the PLATFORM (600), there is also included a PROCESS (610), the subject matter of this example, which makes it possible to recognise when, where, and how technical stops occur. THE DETECTED TECHNICAL STOPS (620) are then stored in the Repository, so that they can be used by various APPLICATIONS that serve to deliver specific services and functions to customers. The PROCESS (in the IT sense of the term, for example) and/or APPLICATIONS can also be hosted in one or more different PLATFORMS, of both third parties and the customer.

The PROCESS according to this example can receive, as input:
1. POSITIONS AND EVENTS (670A) of the vehicles;
2. DECLARED TECHNICAL STOPS (670B), declared by the workshops it is intended to monitor;
3. MASTER DATA of the WORKSHOPS (670C) it is intended to monitor; for example, WORKSHOP MASTER DATA includes an identification code and area information for each of the maintenance centres stored in the database-repository.
4. MASTER DATA of the VEHICLES (670D) it is intended to monitor. For example, the VEHICLE MASTER DATA includes an identification code of each of the vehicles to be monitored.

The PROCESS works according to the principle of "progressive enhancement", that is, it can work with a minimal set of inputs, and improve its accuracy, reliability, and responsiveness if data with better characteristics are provided. In this case, "providing data with better characteristics" means providing them more promptly, and/or with more information, and/or with greater frequency, and/or providing several types (the 4 listed above).

In the present example, however, each APPLICATION requires a minimum different set of inputs, with different minimum characteristics: if they are present, they can be delivered, otherwise no. Example: the PROCESS can also work in the total absence of DECLARED TECHNICAL STOPS, whereas the APPLICATION that makes a comparison between the DECLARED TECHNICAL STOPS and the DETECTED ones cannot function without it.

POSITIONS AND EVENTS (670A) of the vehicles can be detected and transmitted by OBUs of different suppliers, both installed during the production of the vehicle (factory installation), and subsequently (after market). These data can also be transmitted by the OBUs to a third-party server and then later sent to a process (in IT terms, or also an algorithm). These data can be accompanied with the signals coming from the CAN network inside the vehicle. The monitored fleet of vehicles can also be made up of a mixture of these cases. The positions are an example of the position information discussed above, whereas the events are an example of the secondary information discussed above.

THE DECLARED TECHNICAL STOPS, declared by workshops, are transmitted by them to the long-term hire company, which can forward them to the PLATFORM in order to improve the quality of the DECECTED TECHNICAL STOPS and exploit various APPLICATIONS.

The MASTER DATA can be transmitted once only and synchronised between the LTH and platform on a daily or weekly basis. It is important that the geographic perimeter (GEOFENCE), within which vehicles are repaired and parked, is defined for every workshop. If the GEOFENCE is not correct, the quality of the result produced by the PROCESS will be extremely low. It is advisable to define a GEOFENCE about 5-10 metres wider than the real one. The GEOFENCE is an example of the maintenance area information. The platform server 600 is preferably capable of communicating with one or more vehicles of a fleet controlled by the server 600 itself. Based on the determination of the presence of a stop for one or more vehicles, the server can thus control one or more other vehicles (currently not in a stop status) in order to maximise the use of the vehicles, as also explained above.

By way of illustration, the PROCESS can be composed of these 3 types of components:
- Recognition of a technical stop
- Handling of exceptions (automatic and manual)
- Filtering, merging and smart matching

The recognition of a technical stop takes place by analysing the flow of POSITIONS and EVENTS on the entry side (which thus represents an example of determining a technical stop status on the basis of the entry status and/or secondary status). The analysis can be performed in real time, i.e. on the basis of what is happening at this moment to vehicles, or deferred, i.e. by analysing the POSITIONS and EVENTS transmitted by vehicles a posteriori.

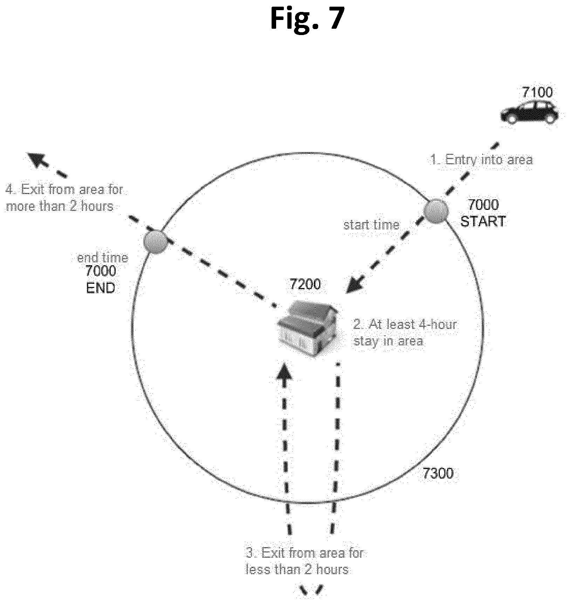

Figure 7 illustrates the recognition steps according to one example:
- in step (or phase) 1, the vehicle 7100 enters the area 7300 of the workshop 7200, the area 7300 being represented by a circle; therefore, at a first instant 7000-START an entry status into the workshop is determined;
- in a step 2, it is determined that the vehicle 7100 has remained in the workshop for a certain interval of time, for example for 4 or more hours;
- in a step 3, it is determined that the vehicle 7100 has left the workshop for a duration of no longer than two hours;
- in a step 4, it is determined that the vehicle has left the workshop for a period of at least 2 hours (all values are only illustrative).

When the system detects the presence of all four of the above-described steps, it can be determined with high accuracy that the vehicle was in a technical stop status between the times 7000-START and 7000-END. Step 1 is an example of an entry status, whilst steps 2 to 4 are examples of secondary statuses. According to the present example, furthermore, each of the steps 2 and 3 provides respective secondary information that enables the determination of a secondary status which corresponds to a technical stop confirmation status. Therefore, in the example, each of the steps 2 and 3 enable the presence or absence of a stop status to be determined with high accuracy. It is further noted that in step 4 it is possible to confirm the presence of a technical stop with accuracy and/or the duration of the technical stop itself with high accuracy. In other words, step 4 leads to a determination that the secondary status is a technical stop confirmation status and/or a status of the vehicle's exit from the technical stop (which can also be called technical stop end status). In other words, via step 4 it is possible to obtain confirmation of the presence of the technical stop status and/or a very accurate indication of the duration of the technical stop (the duration being obtained by comparing the time instant corresponding to the entry status with the time instant corresponding to the exit status, for example by subtracting the former from the latter, or taking the absolute value of the difference between them). What has been said in this and in other examples obviously also applies for the embodiments illustrated earlier.

The hours indicated in the diagram at points (steps) 2,3 and 4 above can be configured on the basis of the customer's needs. As may be deduced from the diagram, the PROCESS takes into account that, during repairs performed by workshops, a test run of the vehicle is often carried out to verify that it works correctly before returning it to the customer.

The PROCESS produces, as outputs, DETECTED TECHNICAL STOPS, each of which has the following attributes, in this example:
- WORKSHOP identification code.
- VEHICLE identification code.
- START date and time (entry of the vehicle into the workshop).
- End date and time (delivery of the vehicle back to the customer) .

Exception handling serves to minimise the false positives, i.e. the DETECTED TECHNICAL STOPS that are not such in reality, for example in the following cases:
- Vehicles used by the workshop as replacement cars for customers.
- Vehicles of employees of the workshop.
- Roadside assistance vehicles.
- Vehicles of people who live in the same building where the workshop is located or in any case habitually use the same car park.

There are moreover a series of measures making it possible to improve and consolidate the output, e.g.:
- Recognising and highlighting the cases of the start of the technical stop with conveyance into the workshop by means of a breakdown lorry.
- Combining a number of DETECTED TECHNICAL STOPS into one only when a repair is performed over a number of days and the final customer picks up the vehicle at the end of the day and takes it back to the workshop the following morning.
- Identifying which DETECTED TECHNICAL STOPS correspond to DECLARED TECHNICAL STOPS in order to create a feedback loop making it possible to generate automatic exceptions or carry out a fine tuning of the parameters.

The process of the present example thus produces an output that can optionally be used by APPLICATIONS. In fact, as said previously, the DETECTED TECHNICAL STOPS are used by a series of APPLICATIONS to provide functions to long-term hire companies (LHT).

In addition to what was said previously, in order to deliver such functions, it is preferable to:
- identify a structure that enables a set of authorised workshops to be associated with a customer and an LHT.
- define the fences of each workshop.
- manage a flow of entry, editing and deletion of workshops.
- provide a user interface to give the possibility of defining exceptions manually.
- manage the deactivation of vehicle alarms when the start trigger goes off, and then reactivate them when the end trigger goes off (above all to prevent false theft alarms from being sent to anti-theft operations centres).

Going back to figure 7, it is noted that in order to determine that a vehicle is actually in a stop status, it is not necessarily indispensable to detect all of the above steps. In fact, it is in any case possible to obtain good or excellent precision (in determining the presence of a stop status) also when only an entry status and a single secondary status are combined. For example, the presence of a stop status can also be detected only via steps 1 and 2; step 4 can be used to determine the length of the stop status. If only the two steps 1 and 4 are used, both the presence of the stop status and the duration thereof are determined with accuracy. It is noted that by increasing the number of secondary statuses used in the determination, it is possible to improve the accuracy of the determination itself. However, improvements may be obtained also by using only one of the secondary conditions: this can be easily deduced from the following table, obtained as a result of the considerations made by the inventors, and wherein "Rule Name" means a secondary information or a secondary status obtained from the secondary information (table showing incremental improvements obtained from the procedure for determining technical stops):

| ID | Rule Name | Description | Impact |
|---|---|---|---|
| 1 | Vehicle Test by maintenance personnel | We identify a "test run" carried out by maintenance personnel to verify that a repair was successful. Example: we have seen that after a repair is made, a test run is made around the neighbourhood, which usually lasts 10 minutes | High |
| 2 | Information from CanBus | The box is connected to the on-board network and is thus capable of receiving data about problems from control units. If a control unit signalled a problem and it then disappeared, it is highly likely that this happened during servicing. The technical stop is thus confirmed | High |
| 3 | Home / Workplace close to the workshop | Some customers have their home or workplace close to a workshop. We realise this because the vehicle is usually parked at home during the night, but at work during the day. In this case the technical stop is filtered out | Low |
| 4 | Secondary car park of the workshop | Sometimes vehicles enter the area of a workshop and are then moved into another car park. This occurs when the workshop has two car parks. After some cases in which this occurs, the method/algorithm will determine whether to add the second car park as "secondary car park" of the workshop-{}- | Medium |
| 5 | Roadside assistance | If a customer goes to a workshop after having requested roadside assistance, it is most likely a technical stop | Medium |

As may be deduced from the table, also using each of the rules 1 or 2, it is possible in any case to obtain a highly accurate determination. Accuracy can be further improved by combining a plurality of the above rules.

As illustrated above, the present invention thus enables the presence of a technical stop, as well as the duration thereof, to be determined with accuracy, automatically and autonomously.

In the present description, reference has been made to units such as a processor, memory and receiver to indicate any concentrated device (that is, a distinct or stand-alone unit) or a distributed one (that is, made up of several components connected to one another, physically near or remote); such units can thus be replaced by respective processing means, storage means and receiving means, which may likewise be concentrated or distributed and made up of hardware, software or combination of these.

Many of the embodiments and examples have been explained with reference to steps of methods or processes. However, what has been described can also be implemented in a program to be run on a processing entity (also distributed) or an entity whose means are suitably configured. As illustrated above, the entity can be implemented in a single device, via HW/SW or a combination thereof, or in multiple interconnected units or devices (HW, SW or a combination thereof in this case as well). Naturally, the description set forth above of embodiments and examples applying the principles recognised by the inventors is provided solely for the purpose of exemplifying such principles and must therefore not be construed as a limitation of the scope of protection claimed herein.

## Claims

1. A method for determining a technical stop of a vehicle at a maintenance centre, the method comprising the steps of:
- storing (S100) maintenance area information comprising information representing at least one area of a maintenance centre;
- receiving (S110) position information from said vehicle at least at a first instant comprised in a plurality of time instants;
- determining (S120) an entry status into a maintenance centre when the position information received at the first time instant is in correlation with said maintenance area information;
- determining (s130), at the second time instant following the first time instant, a secondary status on the basis of secondary information received from the vehicle;
- determining (S140) the presence of a technical stop status on the basis of said entry status and said secondary status.

2. The method according to claim 1, wherein said secondary information comprises at least one between:
- information indicating a disappearance of a malfunction, wherein the malfunction is preferably a malfunction detected by, or in an electronic on-board device;
- information indicating a situation of malfunctioning.

3. The method according to claim 1 or 2, wherein the secondary information comprises information on the vehicle's position at a third time instant and a fourth time instant, and wherein determining said secondary status comprises determining that the position information at said third instant is not in correlation with said maintenance centre area information, and the position information at said fourth instant is in correlation with said maintenance centre area information, wherein the difference between said third time instant and fourth time instant is greater than or equal to a predetermined threshold.

4. The method according to any one of the preceding claims, wherein the secondary information comprises position information of the vehicle at a plurality of time instants following the first time instant, and wherein determining said secondary status comprises determining that the position information at each of said plurality of time instants is in correlation with said maintenance centre area information, and wherein said plurality of time instants defines a time interval equal to or greater than a certain threshold.

5. The method according to any one of the preceding claims, wherein said maintenance area information for a maintenance centre comprises additional area information representing at least one additional area of the maintenance centre.

6. The method according to any one of the preceding claims, comprising the step of
- receiving additional position information from a plurality of vehicles for which a technical stop status at a same maintenance centre has been determined;
- determining an added area condition when, for a predetermined number of vehicles comprised in said plurality, respective additional position information is mutually correlated, but not correlated with said area information;
- adding, to said maintenance area information for said same maintenance centre, additional area information representing at least one additional area of the maintenance centre.

7. The method according to any one of the preceding claims, comprising the step of
- determining an exception handling condition; and wherein
- said presence of a stop status is additionally determined on the basis of said exception handling condition, and wherein, preferably,
said exception handling condition is determined when said entry status is determined in a predetermined time interval.

8. The method according to claim 7, wherein said exception handling condition is determined when an entry status condition is detected a predetermined number of times in a predetermined time interval.

9. The method according to one of the preceding claims, wherein said vehicle is a first vehicle comprised in a set of vehicles, the method further comprising the step of determining a rate of use of the set of vehicles on the basis of said presence of a stop status for said first vehicle.

10. The method according to one of the preceding claims, wherein said vehicle is a first vehicle comprised in a set of vehicles, the method further comprising the step of:
determining an enabling status for a second vehicle comprised in said set and differing from said first vehicle on the basis of said presence of a stop status.

11. The method according to one of the preceding claims, wherein said vehicle is a first vehicle comprised in a set of vehicles, the method further comprising the step of:
programming a programmed stop status for a second vehicle comprised in said set and differing from said first vehicle on the basis of said presence of a stop status.

12. A server (200) for determining a technical stop of a vehicle at a maintenance centre, the server comprising:
- a memory (210) for storing maintenance area information comprising information representing at least one area of a maintenance centre;
- a receiver (220) for receiving position information from said vehicle at least at a first time instant and a second time instant; and a processor (230) for:
- determining an entry status into a maintenance centre when the position information received at the first time instant is in correlation with said maintenance area information;
- determining, at the second time instant following the first time instant, a secondary status on the basis of secondary information received from the vehicle;
- determining the presence of a technical stop status on the basis of said entry status and said secondary status.

13. A computer program comprising instructions which, when the program is run on a computer, ensure that the computer performs the steps of any one of claims 1 to 11.

14. A vehicle (400) for monitoring information related to a technical stop of a vehicle at a maintenance centre, the vehicle comprising:
- a processor (410) configured to generate position information at a plurality of time instants;
- a transmitter (420) configured to send said position information to a server at a first time instant; wherein
- said transmitter (420) is further configured to send secondary information at a second time instant following the first time instant.

15. A system (500) for determining the technical stop of at least one vehicle at a maintenance centre, the system comprising a server (510) according to claim 9 and said at least one vehicle (520).
